# EUROPEAN PATENT APPLICATION

(11) **EP 2 245 918 A1**
(43) Date of publication of application: **03.11.2010**
(21) Application number: 10155423.6
(22) Date of filing: 04.03.2010
(51) Int. Cl.: A01G 3/025

(54) **Labor-saving garden scissors**

(30) Priority: 28.04.2009 TW 098114060
(71) Applicant: Natura Innovation Ltd., Taipei 104 (TW)
(72) Inventor: Shan, Su-Hua, 104, Taipei (TW)
(74) Representative: Dossmann, Gérard

(57) **Abstract**

A labor-saving garden scissors comprises a first handle (302) having a first blade (304); a second handle (306) having a first toothed portion (308); a second blade (310) having a second toothed portion (312) mating with the first toothed portion (308); a connection bar (314) having first, second and third pivotal points (316,318,320), wherein the third (320) and second (318) pivotal points are respectively pivotally-coupled to the second blade (310) and second handle (306); a first pivotal element (322) pivotally-coupling the first (304) and second blades (310); a second pivotal element (324) pivotally-coupling the second blade (310) and third pivotal point (320); a third pivotal element (326) pivotally-coupling the second handle (366) and second pivotal point (324); and a fourth pivotal element (328) pivotally-coupling the second blade, first blade and first pivotal point with the second blade (310) arranged between the first blade (304) and the connection bar (314). The effort lever arm (Y) between the second (318) and third pivotal points (320) is greater than the resistance lever arm (X) between the first (316) and third pivotal points (320).

## Description

The present invention relates to a garden scissors, particularly to a labor-saving garden scissors having a design of an effort lever arm.

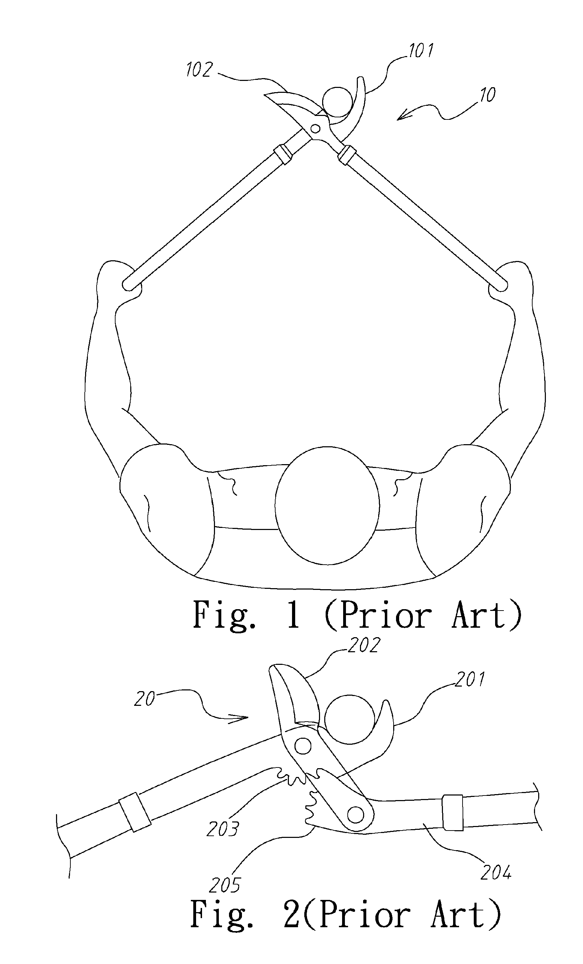

Refer to Fig.1. Normally, a conventional large-size garden scissors 10 has a static jaw 101 and a movable jaw 102 pivotally coupled to each other, and the blade on the movable jaw 102 is used to cut off a branch. Such a type of garden scissors 10 lacks a labor-saving design. Therefore, a user must open two handles of the garden scissors 10 to a large angle and cut the branch with a great force. Such a design is anti-ergonomic and likely to cause muscle ache.

Therefore, a US patent No.5689888 disclosed a labor-saving garden scissors 20 (shown in Fig.2), wherein a static jaw 201 has a fan-like toothed structure 203 in one side thereof, and wherein a pivotal structure is used to pivotally connect a movable jaw 202 and a handle 204 of the movable jaw 202, and wherein the front end of the handle 204 has a fan-like toothed structure 205 able to mate with the fan-like structure 203, whereby it is expected that the garden scissors 20 can be operated easily via the function of the fan-like toothed structures 203 and 205. However, such a design does not indeed achieve a labor-saving effect. Further, when trimming trees, the user has to open the handles of the garden scissors 20 to an angle as great as about 180 degrees. In such a state, the too much opened arms are hard to apply force to the handles and make the static jaw 201 and the movable jaw 202 cut off branches. Therefore, such a design is anti-ergonomic, and the user is unlikely to apply force to operate the garden scissors 20 easily and efficiently with his two arms having an appropriate angle.

Accordingly, the present invention proposes a labor-saving garden scissors to overcome the abovementioned problems.

The primary objective of the present invention is to improve the problem of a US patent No.5689888 and provide a labor-saving garden scissors, whereby a user can easily trim a thick branch.

The present invention proposes a labor-saving garden scissors, which comprises a first handle having a first blade connected to the front thereof; a second handle having a first toothed portion at the front thereof; a second blade having a second toothed portion at the bottom thereof, wherein the second toothed portion mates with the first toothed portion; a connection bar having a first pivotal point, a second pivotal point, and a third pivotal point, wherein the third pivotal point is pivotally coupled to the second blade, and the second pivotal point is pivotally coupled to the second handle; a first pivotal element with two ends thereof respectively pivotally coupled to the second blade and the first blade; a second pivotal element with two ends thereof respectively pivotally coupled to the second blade and the third pivotal point of the connection bar; a third pivotal element with two ends thereof respectively pivotally coupled to the second handle and the second pivotal point of the connection bar; a fourth pivotal element pivotally coupling the second blade, the first blade, and the first pivotal point of the connection bar with the second blade arranged between the first blade and the connection bar, wherein the effort lever arm between the second pivotal point and the third pivotal point is greater than the resistance lever arm between the first pivotal point and the third point, whereby a user can save his labor in trimming trees. As the present invention has an additional effort lever arm, which is greater than the resistance lever arm, a user can perform trimming with the present invention less laboriously than the conventional garden scissors.

Below, the embodiments are described in detail in cooperation with the attached drawings to make easily understood the objective, technical contents, characteristics and accomplishments of the present invention.
- Fig.1: is a diagram schematically showing the operation of a conventional garden scissors;
- Fig.2: is a diagram schematically showing the structure of a conventional labor-saving garden scissors;
- Fig.3: is a perspective view schematically showing a labor-saving garden scissors according to a first embodiment of the present invention;
- Fig.4: is an exploded view schematically showing the labor-saving garden scissors according to the first embodiment of the present invention;
- Figs.5-8: are diagrams schematically the operation of the labor-saving garden scissors according to the first embodiments;
- Fig.9: is an exploded view schematically showing a labor-saving garden scissors according to a second embodiment of the present invention; and
- Figs.10-13: are diagrams schematically the operation of the labor-saving garden scissors according to the second embodiments.

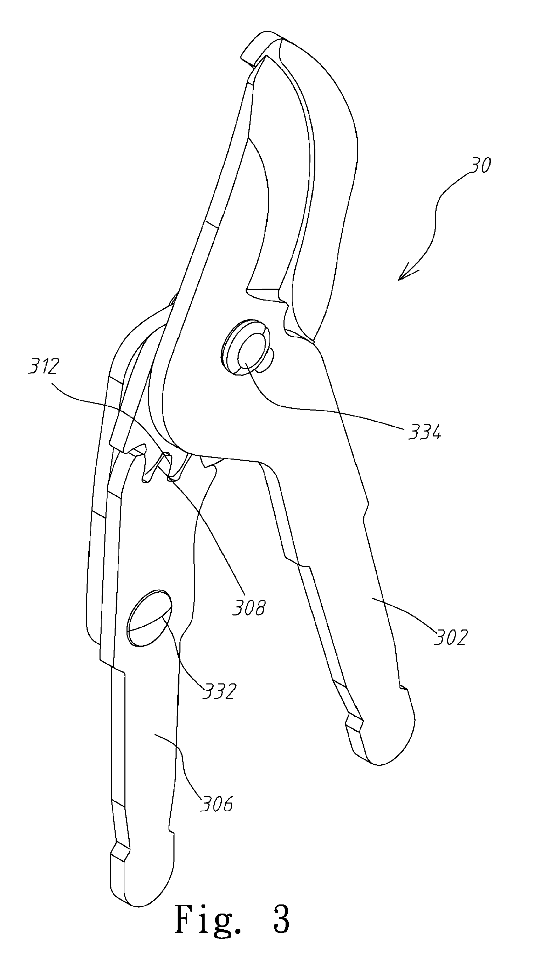

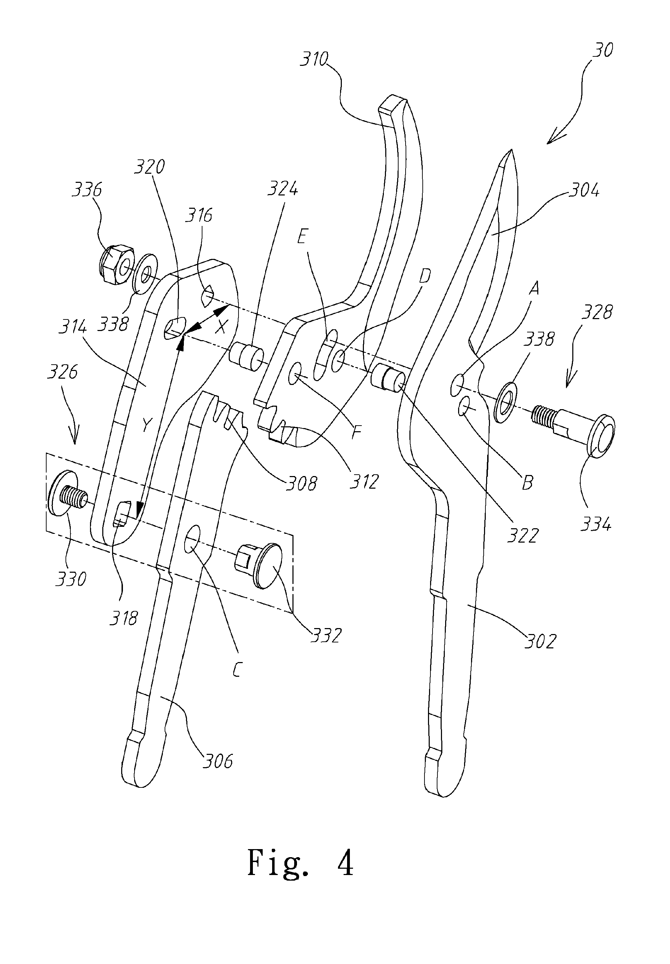

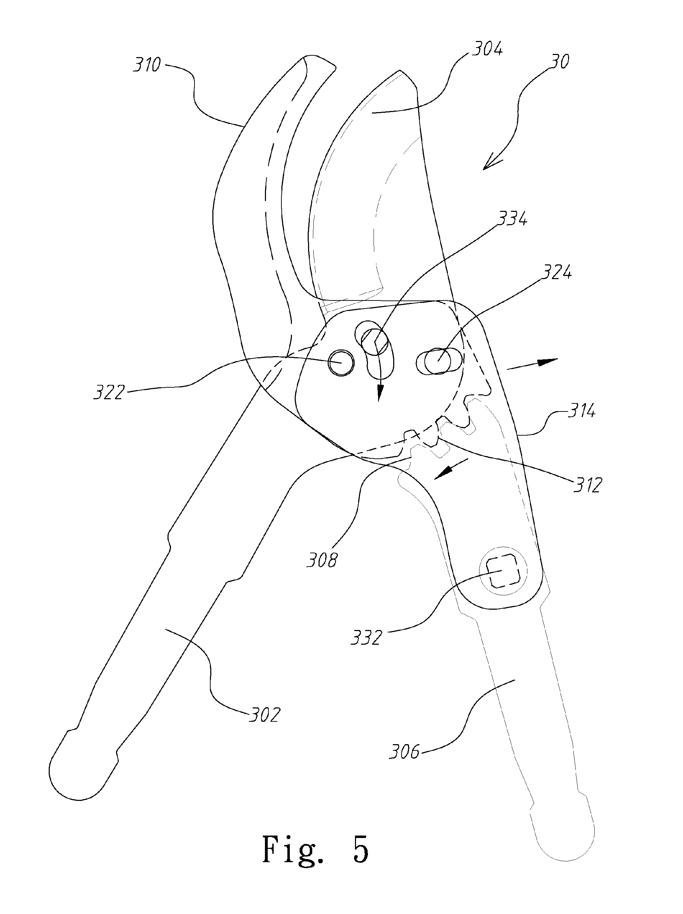

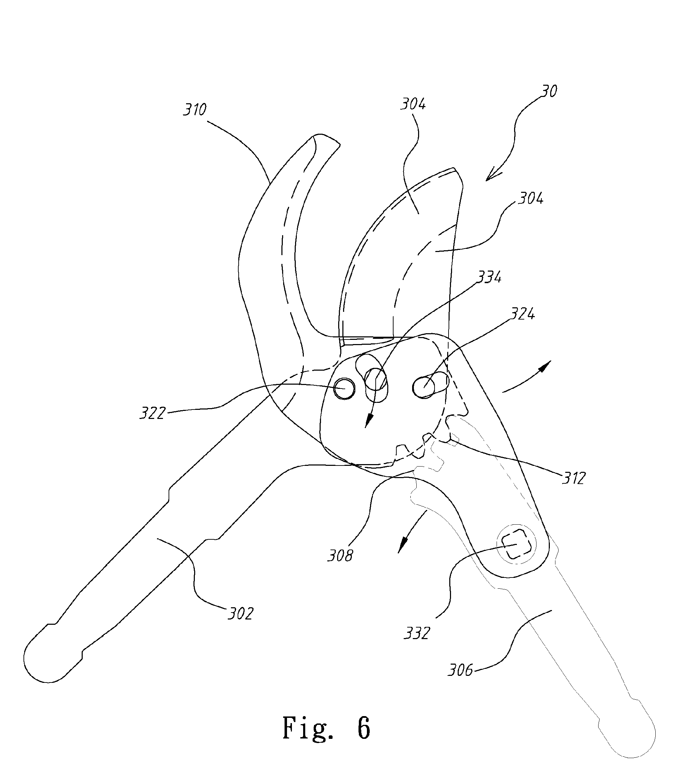

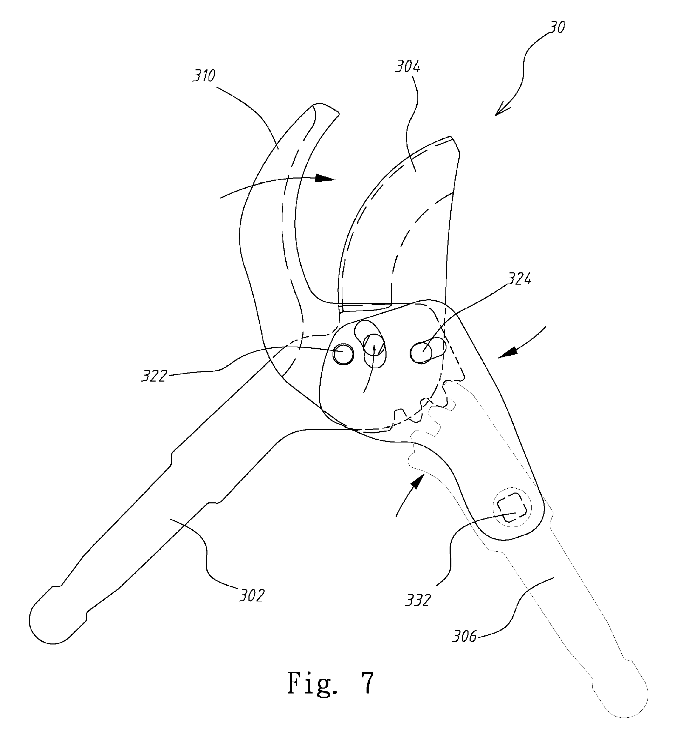

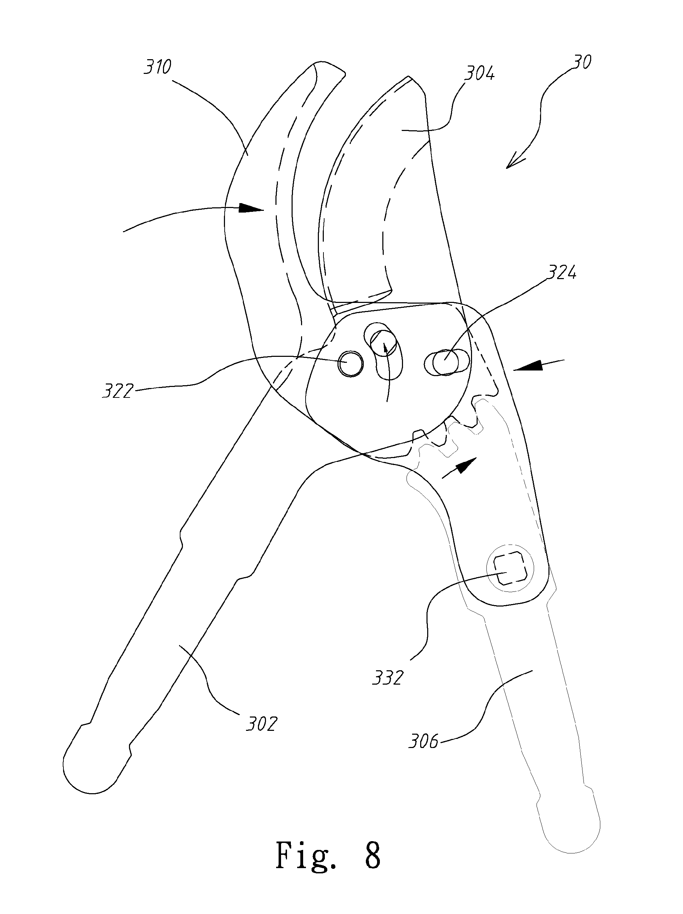

Below, the technical contents of the present invention are described in cooperation with Figs.3-8. Fig.3 and Fig.4 are respectively a perspective view and an exploded view schematically showing a labor-saving garden scissors according to a first embodiment of the present invention. Figs.5-8 are diagrams schematically the operation of the labor-saving garden scissors according to the first embodiments.

In the first embodiment, the labor-saving scissors 30 of the present invention comprises a first handle 302, a second handle 306, a second blade 310, and a connection bar 314. The first handle 302 has a first blade 304 connected to the front thereof, a pivotal point A, and a pivotal point B. The second handle 306 has a first toothed portion 308 at the front thereof. In the first embodiment, the first toothed portion 308 has a fan-like shape. The second blade 310 has a second toothed portion 312 at the bottom thereof. The second toothed portion 312 mates with the first toothed portion 308 and also has a fan-like shape. The second handle 306 has a pivotal point C. The second blade 310 has a pivotal D, a pivotal point E, and a pivotal point F. A first pivotal element 322 pivotally couples the pivotal point B of the first handle 302 and the pivotal point D of the second blade 310.

The connection bar 314 has a first pivotal point 316, a second pivotal point 318 and a third pivotal point 320. A second pivotal element 324 pivotally couples the pivotal point F of the second blade 310 and the third pivotal point 320 of the connection bar 314. A third pivotal element 326 pivotally couples the pivotal point C of the second handle 306 and the second pivotal point 318 of the connection bar 314.

A fourth pivotal element 328 pivotally couples the pivotal point E of the second blade 310, the pivotal point A of the first handle 302, and the first pivotal point 316 of the connection bar 314. The third pivotal element 326 and the fourth pivotal element 328 are screw-fixing devices. In the first embodiment, the third pivotal element 326 has a screw 330 and a turnbuckle 332. The fourth pivotal element 328 has a screw 334, a nut 336 and washers 338, and the washers 338 are used to enhance the tightness of the fourth pivotal element 328.

From the structure described above and the drawings, it is known that the second blade 310 is arranged between the first blade 304 and the connection bar 314. The distance between the first pivotal point 316 and the third pivotal point 320 is the resistance lever arm X; the distance between the second pivotal point 318 and the third pivotal point 320 is the effort lever arm Y; the effort lever arm Y is greater than the resistance lever arm X. In this embodiment, the first blade 304 is a very sharp knife, and the second blade 310 is a blunter knife. When a user trims trees with the labor-saving garden scissors of this embodiment, the first handle 302 and the first blade 304 are static, and the second handle 306 and the second blade 310 are driven by the force of the user to move a branch of a tree toward the first blade 304. Thus, the branch is cut off by the first blade 304 and the second blade 310.

In comparison with the prior art the US patent No.5689888, the present invention has the design of the connection bar 314 with an additional effort lever arm Y, which is greater than the resistance lever arm X. Therefore, a user can perform trimming with the garden scissors of the present invention less laboriously than the conventional garden scissors.

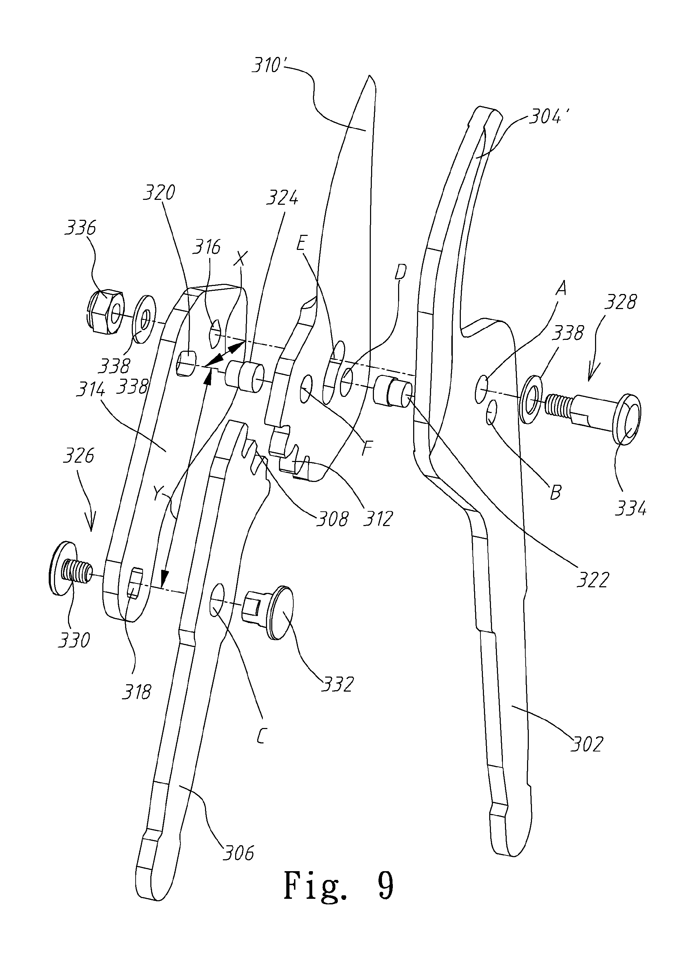

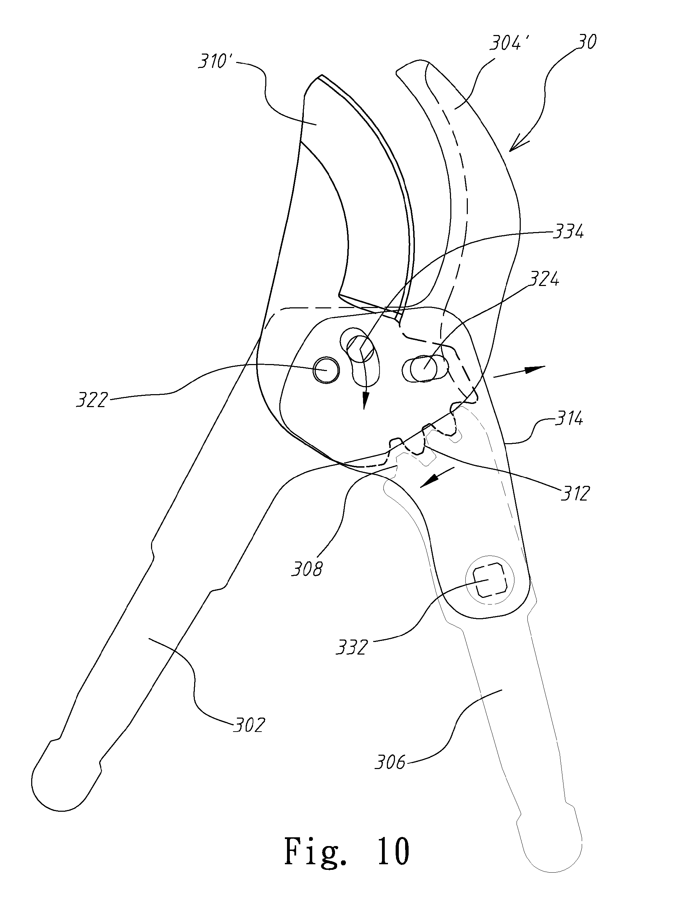

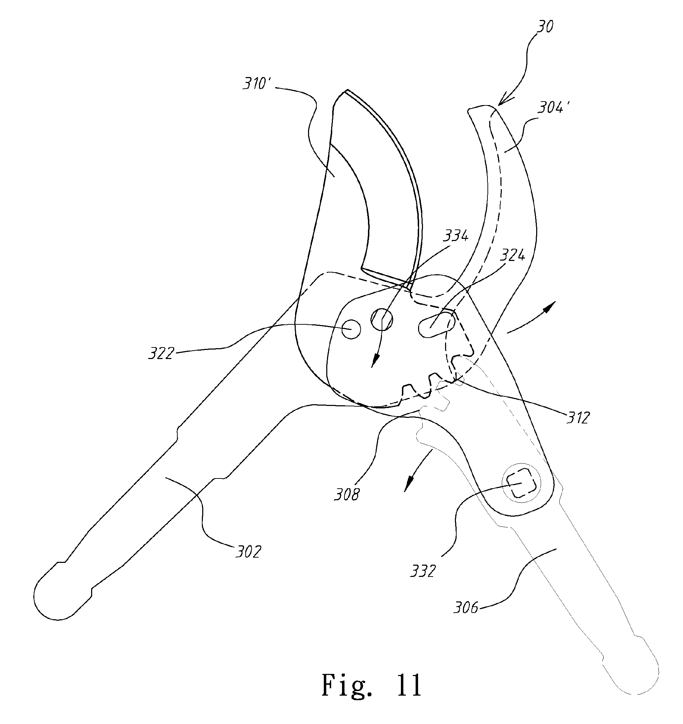

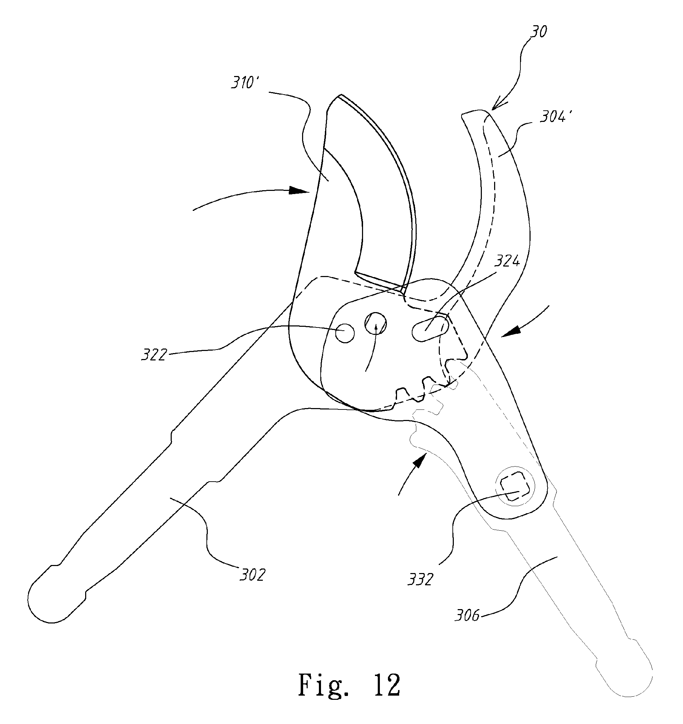

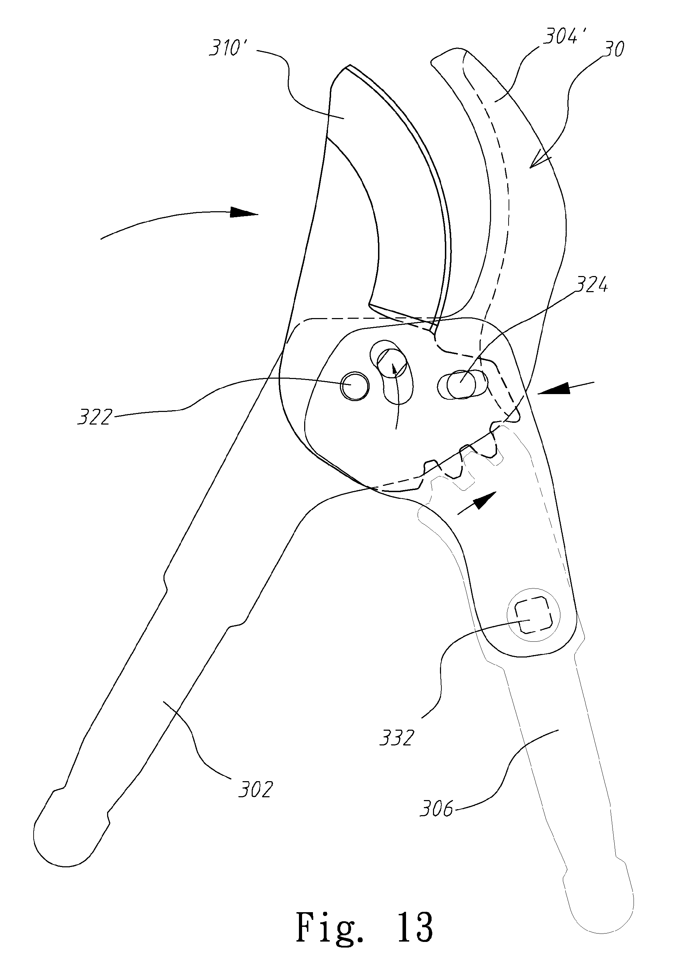

Refer to Figs.9-13 for a second embodiment of the present invention. Fig.9 is an exploded view schematically showing a labor-saving garden scissors according to the second embodiment of the present invention. Figs.10-13 are diagrams schematically the operation of the labor-saving garden scissors according to the second embodiments.

The second embodiment is basically similar to the first embodiment except the first blade 304' is a blunter knife and the second blade 310' is a sharp knife in the second embodiment. When a user trims trees with the labor-saving garden scissors of this embodiment, the first handle 302 and the first blade 304' are static, and the second handle 306 and the second blade 310' are driven by the force of the user to move a branch of a tree toward the first blade 304'. Thus, the branch is cut off by the first blade 304' and the second blade 310'.

The embodiments described above are only to exemplify the present invention but not to limit the scope of the present invention. Any equivalent modification or variation according to the scope of the present invention is to be also included within the scope of the present invention.

## Claims

1. A labor-saving garden scissors comprising
a first handle having a first blade connected to a front thereof;
a second handle having a first toothed portion at a front thereof;
a second blade having a second toothed portion at a bottom thereof, wherein said second toothed portion mates with said first toothed portion;
a connection bar having a first pivotal point, a second pivotal point, and a third pivotal point, wherein said third pivotal point is pivotally coupled to said second blade, and said second pivotal point is pivotally coupled to said second handle;
a first pivotal element with two ends thereof respectively pivotally coupled to said second blade and said first blade;
a second pivotal element with two ends thereof respectively pivotally coupled to said second blade and said third pivotal point of said connection bar;
a third pivotal element with two ends thereof respectively pivotally coupled to said second handle and said second pivotal point of said connection bar;
a fourth pivotal element pivotally coupling said second blade, said first blade, and said first pivotal point of said connection bar with said second blade arranged between said first blade and said connection bar,
wherein a distance between said first pivotal point and said third pivotal point is smaller than a distance between said second pivotal point and said third pivotal point.

2. The labor-saving garden scissors according to claim 1, wherein said first pivotal element, said second pivotal element and said fourth pivotal element are pivotal devices.

3. The labor-saving garden scissors according to claim 2, wherein each said pivotal device includes a screw-fixing device.

4. The labor-saving garden scissors according to claim 3, wherein said screw-fixing device includes a screw and a nut.

5. The labor-saving garden scissors according to claim 2, wherein each said pivotal device includes a screw-fixing device and washers.
